# EUROPEAN PATENT SPECIFICATION

(11) **EP 3 538 786 B1**
(45) Date of publication and mention of the grant of the patent: **22.02.2023**
(21) Application number: 17794985.6
(22) Date of filing: 10.11.2017
(51) Int. Cl.: F16D 69/02

(54) **FRICTION MATERIAL**
REIBUNGSMATERIAL
MATÉRIAU DE FROTTEMENT

(30) Priority: 11.11.2016 EP 16198531
(43) Date of publication of application: 18.09.2019
(73) Proprietor: Promat Research and Technology Centre N.V., 2830 Tisselt (BE)
(72) Inventor: SANTAMARIA RAZO, Diego Adolfo, 5643 PB Eindhoven (NL); KERSSEMAKERS, Arnoldus Maria, 6065 ES Montfort (NL); ABDUL-KADER, Oras, 9100 Saint-Niklaas (BE)
(74) Representative: Etex Services NV - Etex IPSC
(86) International application number: PCT/EP2017/078955
(87) International publication number: WO 2018/087331

(56) References cited:
- JP-A- H05 247 445
- US-A1- 2007 105 978
- US-A1- 2011 297 041

## Description

### Field of invention

The invention relates to friction materials, in particular friction materials with applications in motor vehicles.

### Background

Corrosion is a problem in many industries, resulting in estimated annual losses of over 250 billion USD. Friction materials in particular are susceptible to corrosion due to the harsh and varied operating conditions in which they are used. It is estimated that the automotive industry, for example, suffers annual losses of over 100 billion USD due to corrosion.

The composition of friction materials may vary with respect to constituents used and the relative amounts thereof, depending on the desired properties of the friction material and the friction material system employed. Classifications of friction material systems are e.g. metallic, semi-metallic, low-steel, non-asbestos organic (NAO), NAO/non-steel and ceramic friction materials. Usually however the following components are contained in a friction material formulation: a binding agent, reinforcing fibres, fillers and frictional additives such as abrasives and lubricants. Corrosion is a problem across these categories.

An example of a friction lining is described in US5433774, in which a standard resin binder is replaced with an inorganic silicate-containing binder to improve high temperature performance and reduce brake fade. The particular problems linked to corrosion are not addressed. Another example of a friction material can be found in US4994506, in which a non-asbestos brake composition includes synthetic xonotlite for the purpose of easier manufacturing, lower noise, and less brake fade. The specific issues of corrosion are not addressed. A further example of a non-asbestos friction material is described in US2007/0117881A1, in which a two-layer friction material system formed integrally with a pressure plate. The system is intended to reduce noise during braking, colloquially known as "brake squeal", and does not address the problem of corrosion of friction materials and their friction couple surfaces.

Corrosion acts by varied mechanisms, for example by galvanic corrosion, general corrosion and pitting mechanisms and can be exacerbated by many factors, including fretting, erosion, exfoliation, dealloying, stress, cracking and fatigue.

Friction materials are often exposed to a multitude of these factors and consequently are challenging materials to work with in tackling corrosion. When used as a brake, for example, the problem of stiction (static friction) can occur due to corrosion between the surfaces of the friction couple, for example a rotor and brake pad. In fact, severe corrosion can cause the surfaces to become chemically attached via a corrosion layer, so that the only way to detach them is by exerting a tangential force by accelerating the vehicle until the stiction is overcome.

This is a highly undesirable situation, yet not avoidable even with modern braking systems. As well as the issues with stiction, corrosion of friction materials, particularly in braking systems, can lead to more frequent need to replace components, costly preventative maintenance such as painting or coating, overdesign of materials to compensate, noise generation, exclusion from use of otherwise desirable materials, damaged equipment, risk of equipment failure, release of toxic products and aesthetic deterioration of friction materials due to visible corrosion.

As well as the large number of issues related to corrosion of friction materials, other considerations cannot be ignored when seeking to alleviate corrosion. In particular, the friction performance (coefficient of friction), wear rate and noise generation must be considered.

In an automotive brake system, typically comprising a brake pad and a metal rotor, problems arise when either component corrodes. Related to brake pad corrosion, common problems are damaged aesthetics, cracking, noise generation, fading, efficiency reduction, increased braking distance and stiction on the disc. Related to metallic disc/rotor corrosion, common problems are damaged aesthetics, score and groove marks on disc brakes, contaminated mounting of brake pad replacement, pressure marks, pedal feeling effects for the driver, shortened component life and stiction to the brake pad. Problems relating to stiction are especially acute for parking brakes.

US2011/0297041A discloses a method for producing a friction lining of a brake shoe, the composition comprising an open-pore carrier material, a binder and a functional material.

JP H05 247445 A discloses a friction material comprising porous particles of hydrated calcium silicate.

### Summary of invention

To solve the aforementioned problems, the present invention provides a friction material comprising a particulate inorganic porous material, wherein the particulate porous material comprises an anticorrosive agent absorbed within its pores, wherein the anticorrosive agent comprises an alkali silicate.

The inclusion of an anticorrosive agent within the pores of a particulate material facilitates good dispersion of the anticorrosive agent throughout the friction material. In addition, including an anticorrosive agent in this manner facilitates controlled release of the anticorrosive agent over time. When used as a brake pad, this means that the friction material may experience less or entirely avoid damaging corrosion during use.

Furthermore, the present invention allows the delivery of anticorrosive agents to the friction surface that could not previously be used due to their liquid form. In particular, waterglass is a desirable anticorrosive agent to use due to its ability to create high pH conditions at the friction surface, thus making the chemical reactions for corrosion, particularly for metals and alloys such as steel, unfavourable.

The benefits of lower corrosion may be large, especially in automotive brake applications where metal-metal contact between a rotor and a brake pad that includes e.g. steel fibres or other metallic components would ordinarily suffer from stiction and other corrosion-related maladies. Accordingly, the invention also provides a brake pad comprising the above-described friction material.

A further aspect of the invention provides a braking system comprising a metal rotor and the brake pad of the invention. The metal rotor may be an alloy such as steel. Preferably the braking system is an automotive braking system. The problems associated with corrosion are acute in motor vehicles, especially in winter conditions where salt applied to roads can accelerate corrosion rates. The braking system of the invention has been found to perform well in conditions simulating winter conditions, as well as at ambient and higher temperatures.

In a preferred example, the braking system is an electronic parking brake system. Currently available electronic parking braked systems are prone to stiction and inclusion of the friction material of the invention as a brake pad in an electronic parking braked system may avoid the afore-mentioned problems related to stiction. This offers the possibility to prolong component life and improve braking performance throughout the life of the braking system.

The present invention also provides a method of making a friction material, the method comprising:
a. mixing a particulate inorganic porous material with other starting materials to form a mixture, wherein the particulate inorganic porous material comprises an anticorrosive agent absorbed within its pores, wherein the anticorrosive agent comprises an alkali silicate;
b. placing the mixture into a mold;
c. subjecting the mixture in the mold to a pressure of from 10 to 70 MPa.

Preferably, the mixing step is a dry mixing step in accordance with industry standards. Dry mixing is commonly used for manufacture of friction materials in order to avoid cracking during pressing and/or curing of the friction material which would normally be expected to occur when including a liquid in the formulation. The present invention, however, can include liquid anticorrosive agents in a friction material by incorporating them into the pores of a particulate inorganic porous material prior to mixing with the other ingredients. The saturation level of the anticorrosive agent is carefully controlled to balance the strength of the friction material with the anti-corrosion effect of the anticorrosive agent.

Preferably, the method of the invention comprises a preliminary step of impregnating the particulate inorganic porous material with the anticorrosive agent.

The other starting ingredients to be mixed with the impregnated particulate inorganic porous material are commonly used friction material ingredients. Examples of suitable ingredients and suitable relative quantities are discussed in more detail below.

The products and method of the invention overcome the challenges of reducing corrosion in friction materials, especially for braking applications, without compromising ease of manufacture or strength or toughness of the friction material.

### Brief description of drawings

Figure 1 shows test results for example 2;
Figure 2 shows test results for example 2;
Figure 3 shows test results for example 2.

### Detailed description

### Particulate porous material

The friction material of the invention comprises a particulate inorganic porous material that is impregnated with an anticorrosive agent.

Suitable particulate porous materials include calcium silicates, primary silicates, inorganic fibre balls, vermiculite, hallysite, zeolites, porous iron oxide and micaceous iron oxide.

These materials are suitable carriers for anticorrosive agents due to various properties. For example, as well as being porous, these materials are thermally resistant up to 800 °C or even above, which is important in friction materials to avoid degradation. Friction materials must endure large and rapid temperature changes, for example during braking.

These materials may also be suitable due to their high specific surface area. The specific surface area is measured in m²/g as the BET (Brunauer-Emmett-Teller) surface area, for instance determined according to the test method ISO9277:2010. It includes the surface area inside pores and is indicative of the ability of the particulate inorganic porous material to retain absorbed anticorrosive agent. The particulate porous material may have a BET value of from 30 to 50 m²/g.

The particulate inorganic porous material preferably has a number average particle size between 5 µm and 3 mm, such as between 5 µm and 1 mm, such as 5 µm and 300 µm. This particle size range may be preferred as smaller particles would not have large enough pores to absorb the anticorrosive agent, while larger particles may not distribute adequately during mixing of the ingredients for a friction material during production.

When the particulate porous material is selected from calcium silicates, primary silicates, vermiculite, hallysite, zeolites, porous iron oxide and micaceous iron oxide, the number average diameter is preferably from 5 µm to 300 µm, more preferably, the number average particle size may be from 35 to 85 µm. The number average particle size of these materials can be determined by, for example, laser diffraction methods.

When inorganic fibre balls are used as a particulate porous material in the invention, the weight average particle size of the fibre balls is preferably from 0.5 to 1.5 mm, more preferably from 0.6 to 1 mm. This may be calculated for example by sieving and weighing techniques.

The surface polarity of these materials may also be an advantage where it is compatible with the polarity of the anticorrosive agent that it is carrying, especially when the anticorrosive agent is a liquid or solution.

The pore size of these materials should be large enough to infiltrate a liquid solution of anticorrosive agent under mixing at room temperature. For example the minimum pore size may be at least 0.01 µm. The pore size should be small enough to keep a liquid in the particle during hot pressing. For example the maximum pore size may be no greater than 5 microns. Pore size can be measured using ISO 16901-2:2006.

The oil absorption value correlates with the maximum level of anticorrosive agent that may be absorbed by these materials. Oil absorption values may be determined according to ISO787-5:1980. The oil absorption values of the inorganic porous materials are suitably in the range 100-500, preferably 200-400, for instance around 300. Porous calcium silicate particles may have an oil absorption capacity of 100-300%. This oil absorption capacity is measured using ASTM D281-31.

In addition, the particulate porous material should preferably meet health and safety requirements.

Calcium silicates are particularly preferred, for example synthetic xonotlite known commercially as PROMAXON^{®}. Xonotlite has the chemical formula Ca₆Si₆O₁₇(OH)₂. The morphology of this material is such that it is an ideal carrier of liquid and solid materials. The internal porous, needled structure combined with a hard outer shell make this functionality possible. Calcium silicates are especially advantageous when the anticorrosive agent is an alkali silicate due to the chemical compatibility, facilitating easy processing to infiltrate the anticorrosive agent into the pores.

Preferably, the particulate inorganic porous material is a calcium silicate material. Calcium silicate particulate porous materials may have a melting temperature as high as 1540°C, making them eminently suitable for inclusion in a friction material that is subject to high temperatures, for example a brake pad.

Another type of particulate inorganic porous material suitable for use in the present invention is inorganic fibre balls. Inorganic fibre balls as used herein are interwoven or entangled inorganic fibres forming "balls", i.e. agglomerated inorganic fibres. These inorganic fibre balls or agglomerates may also be referred to as granules. Fibre balls are different from loose or dispersed fibres, that are not entangled with each other.

The length and the diameter of the inorganic fibres of the inorganic fibre balls may vary within wide ranges. Preferably, the inorganic fibre weight average length of the inorganic fibres that form the inorganic fibre balls is from 100 to 300 µm, such as from 125 to 175 µm. The weight average diameter of the same fibres is preferably from 4 to 15 µm, such as from 5 to 10 µm.

The weight average fibre ball diameter is preferably no more than 1.5 mm. Optionally, the fibre balls have a weighted average diameter in the range 0.5 mm to 1.5 mm, preferably from 0.6 mm to 1 mm.

The fibre ball size is determined by using sieves. Each mass of the fibre balls left in the sieves with a specific mesh is determined. From the data obtained, the weight average of the fibre ball size is calculated.

An advantage of using fibre balls as a carrier for anticorrosive agent is that the noise and vibration harshness of the friction material may be reduced when used e.g. for braking.

Inorganic fibre balls may be made in a mixer. By a mixing process, loose inorganic fibres are agitated or rolled against each other so that agglomeration occurs to form the inorganic fibre balls. The mixer preferably provides a circular motion. Preferably the process involves mixing the inorganic fibres with a liquid in a mixer and drying the obtained mixture, to improve the firmness of the resulting fibre balls. A binder may be used to enhance the mechanical strength of the fibre balls.

Preferably, the particulate inorganic porous material has a substantially spherical particle morphology.

Preferably, the particulate inorganic porous material has a particle size of approximately 35-85 µm.

Preferably, the particulate inorganic porous material comprises micro-pores externally and macro-pores internally. This special structure may facilitate controlled release of the anticorrosive agent and aid a higher degree of saturation compared to different pore structures. Products sold under the trade name Promaxon^{®}, for instance Promaxon^{®}-D, are suitable particulates.

In some embodiments, the particulate inorganic porous material comprises particles with a number average particle size of from 5 µm to 300 µm. Suitable materials are any of calcium silicates, primary silicates, vermiculite, hallysite, zeolites, porous iron oxide and micaceous iron oxide. Especially suitable are calcium silicates such as PROMAXON^{®}.

In some embodiments, the particulate inorganic porous material comprises particles with a weight average particle size of from 0.5 to 1.5 mm. Suitable materials are inorganic fibre balls, especially those made from man-made vitreous fibres such as stone wool.

In some embodiments, the particulate inorganic porous material comprises a mixture of particle sizes. In such embodiments, both inorganic fibre balls and smaller materials such as calcium silicates, primary silicates, vermiculite, hallysite, zeolites, porous iron oxide and micaceous iron oxide may be used in combination. Especially preferred is a combination of calcium silicate particles and inorganic fibre balls.

### Anticorrosive agent

An anticorrosive agent is absorbed into the pores of the particulate porous material. By this interaction, controlled delivery of the anticorrosive agent to the friction couple surfaces is possible.

Preferred anticorrosive agents include alkali silicates. Alkali silicates typically have the general formula SiO₂/M₂O, where M is an alkali metal. Alkali silicates suitable for use in the method of the invention may be in the form known as "waterglass", which is an aqueous solution of the alkali silicate. In the form of waterglass, the anticorrosive agent is the solution of alkali silicate. The ratio of SiO₂:M₂O determines the alkalinity. It is preferred that alkaline forms are utilised in the invention.

By incorporating a waterglass or other liquid anticorrosive agent into the pores of the particulate porous material, it is possible to provide waterglass or other liquid anticorrosive agents in friction materials where this was not previously possible. In particular, friction materials typically are produced by a dry mixing process, which has previously excluded the use of some anticorrosive agents that are supplied in liquid form. In the present invention, this is a benefit as it allows a convenient method of distributing the anticorrosive agent into the porous particulate that can be introduced into the dry friction material ingredient premix.

The friction material preferably contains at least 0.5 wt% alkali silicate as a proportion of the whole friction material based on starting material addition for friction material. More preferably the friction material contains at least 1 wt% alkali silicate, such as at least 2 wt% alkali silicate. Lower amounts may not present a noticeable improvement in corrosion, efficiency and wear compared to friction materials with no alkali silicate. The friction material preferably contains no more than 10 wt% alkali silicate as a proportion of the whole friction material. More preferably the friction material contains no more than 9 wt% alkali silicate, such as no more than 8 wt% alkali silicate. Higher amounts may cause excessive abrasiveness of the friction material, which can lead to undesirably high levels of friction and wear. In the final friction material water used as solvent, e.g. in waterglass, may be retained in the pores, e.g. as water of hydration, or some or all of the water may evaporate during the production process. The level of alkali silicate based on dry SiO₂/M₂O levels in the final product is preferably in the range 0.2% to 5% by weight, preferably 0.4 to 3% by weight.

When alkali silicate is included in an amount of from 0.5 wt% to 10 wt%, as a proportion of the friction material, the alkali silicate may improve the corrosion and friction performance of the friction material and reduce the wear rate compared to a friction material containing no alkali silicate.

Relative to the particulate inorganic porous material, a liquid anticorrosive agent may be present at a saturation of from 5 to 200% w/w, preferably from 10-100 % w/w, more preferably from 25-75 % w/w. This amount is relative to the weight of the particulate inorganic porous material, such that, for example, where 25 %w/w of anticorrosive agent is absorbed into the pores of the particulate inorganic porous material, the ratio of anticorrosive agent : particulate inorganic porous material is 25 : 100. Saturation level can be measured by determining the mass of anti-corrosive agent solution that can be absorbed by a predetermined mass of the porous material using a method corresponding to the oil absorption test ISO787-5:1980 .

Relative to the porous material, expressed as a percentage of the dry weight of anticorrosive agent over the dry weight of the combination of the porous material and the anticorrosive agent, the anticorrosive agent may be present in an amount of between 1.5 and 50 wt%, preferably between 3 and 45 wt%, more preferably between 13 and 45 wt%, or between 13 and 35 wt%, or between 14 and 28 wt%. Dry weight measurement excludes physically or chemically bound water.

Alkali silicates are preferred as the anticorrosive agent because they are sufficiently inert for use in a friction material without requiring further processing steps. In addition, when the particulate porous material is a calcium silicate material, alkali silicates are chemically compatible with the calcium silicate, making it easy to absorb the anticorrosive alkali silicates into the particulate porous material.

Alkali silicates may increase the pH of the friction surface, making kinetic and thermodynamic conditions less favourable for corrosion.

Of the alkali silicates, sodium silicate and potassium silicate are preferred. Sodium silicate and potassium silicate are available as an aqueous solution known as waterglass. Waterglass has environmental benefits of not requiring any other solvents that may be harmful to the environment, animals or people and that may use energy in their production. In addition, the aqueous solution form of alkali silicates is convenient for production of the friction material. Sodium silicate is particularly preferred. Sodium silicate of the formula SiO₂/Na₂O is suitable for use in the invention due to its low cost, ready availability and high dissolution rates.

Preferably the alkali silicate is sodium silicate with a SiO₂:Na₂O ratio of no more than 3.5, preferably no more than 3.25. The ratio of SiO₂:Na₂O is preferably at least 1.60, more preferably at least 3.00. These ratios may reduce the amount of wear of the brake pad and disc when the friction product is used as a brake pad.

Before incorporation into the friction material, the particulate inorganic porous material is preferably dried such that the moisture (e.g. water) content is no greater than 10 wt%, preferably no greater than 5 wt%, more preferably no greater than 3 wt%, and most preferably no greater than 2 wt%, expressed as a weight percentage of the total weight of the particulate inorganic porous material, the anticorrosive agent and the moisture. By removing moisture, the strength of the friction material is improved, because steam released during production of the friction material, which can involve heating steps, can cause cracks to form in the friction material, which weaken the friction material. Therefore the toughness of the friction material can be improved by reducing the amount of steam that may be generated.

The drying step may either be active, i.e. subjecting the particulate inorganic porous material impregnated with anticorrosive agent to a heating and/or dehumidifying environment, or passive, i.e. allowing moisture to evaporate naturally. Thus preferably the anticorrosive agent is in a solid form with a low moisture content immediately prior to mixing with other components to form a friction material. The particulate inorganic porous material allows good dispersion of the anticorrosive agent throughout the friction material and facilitates easy processing.

### Friction material

The friction material comprises the porous inorganic particulate material of the invention dispersed in a matrix and impregnated with the anticorrosive agent according to the invention.

The invention is applicable generally to friction materials. Preferred friction material formulations are those generally known as non-asbestos organic (NAO), low-met, and low-steel. Preferably the friction material is a NAO (non-asbestos organic) type friction material. The material suitably contains an organic binder.

An exemplary NAO friction material may comprise, by volume %v/v, in addition to the porous inorganic particulate material impregnated with anticorrosive agent:

| | |
|---|---|
| 1-30% | mineral fibres, such as 3-15% |
| 0-3% | steel fibres, such as 0-1% |
| 1-40% | abrasives, such as 10-30% |
| 1-20% | solid lubricants, such as 5-12%, or when graphite, 5-15% |
| 5-45% | binder, such as 5-25% binder, preferably 10-20% |
| 0-10% | aramid fibres, preferably 3-7% |
| 1-20% | inorganic and organic fillers, preferably 3-10% |

The friction material may be a "low met" NAO friction material, i.e. it contains a low amount, for example between 0 and 30 wt%, preferably 0-10%, of metal components such as steel fibres or powder.

An exemplary low steel friction material may comprise, by volume %v/v, in addition to the porous inorganic particulate material impregnated with anticorrosive agent:

| | |
|---|---|
| 0.5-1.5 % | fibrillated organic fibre |
| 8-15% | graphite |
| 8-20% | inorganic fillers |
| 4-10% | steel fibres |
| 11-14% | phenolic resin |
| 0.5-10% | abrasives |
| 3-8% | rubber |
| 4-12% | solid lubricants |
| 10-15% | petrol coke |
| 4-8% | mineral fibres. |

The friction material may be a "non-steel" NAO friction material, i.e. a NAO friction material without steel components. A non-steel friction material may contain other metals such as brass, copper, aluminium or zinc.

The matrix may be a non-asbestos, copper-free matrix. Copper-free matrices are preferred in order to meet current and future regulatory requirements to reduce and eventually eliminate copper from car brakes in particular.

The matrix may be a low-steel or no-steel matrix. This means that the matrix contains no, or only low, amounts of steel fibres. In particular, the matrix may contain no more than 20 wt% of steel fibres, preferably no more than 15 wt% steel fibres, more preferably less than 10 wt% steel fibres for instance less than 3 wt%, most preferably less than 1 wt%. The matrix may be free from steel fibres (no-steel matrix). It is desirable to minimise the amount of steel fibres in the matrix so as to reduce rusting, dust, noise and vibration harshness and weight of the friction material.

Preferably the matrix comprises a lubricant, an abrasive, an organic binder, reinforcing fibres and a filler. The abrasive in the matrix is preferably a different material to the MMVF in the friction material.

Suitable abrasives include metal oxides and silicates, including quartz, alumina, zirconium silicate, zirconium oxide and chromium oxide. Abrasives may be chosen depending on the hardness required. The amount of abrasives in the friction material may be from 1 to 20, preferably from 5 to 17, more preferably from 8 to 14 vol% of the friction material.

Suitable lubricants include solid lubricants such as graphite and metallic sulphides such as antimony sulphide, tin sulphide, copper sulphide and lead sulphide. A lubricant may be included in an amount of from 1 to 20, preferably from 5 to 17, more preferably from 8 to 14 vol% of the friction material.

Suitable organic binder raw materials include thermosetting organic binding agents such as phenolic resins, phenol-formaldehyde resins, condensed polynuclear aromatic resins, silicone-modified resins, phenolic siloxane resins, cyanate ester resins, epoxy-modified resins, acrylates, methacrylate, alkyd resins, polyester resins, polyurethanes, cellulose esters, polyvinyl resins, polystyrene resins, nitrocellulose, chlorinated rubbers, styrene butadiene rubber and polyimide resins and may also include curing agents, cross-linkers and solvents. Particularly preferred binders are phenolic resins such as phenol-formaldehyde (Novolac) family resins. The binder may also include a toughener such as epoxy resin.

Preferably the matrix comprises an organic thermoset resin acting as a binder. Particularly suitable organic thermoset resins include phenolic resins such as phenol formaldehyde resins.

The organic binder may be present in an amount of from 5 to 45 vol%, preferably from 5 to 25 vol%, more preferably from 10 to 20 vol% of the friction material.

Fillers may be organic, inorganic, or a mixture of organic and inorganic. Fillers are added to increase the volume of the friction material. Suitable fillers include friction dust, rubber crumb, potassium titanates (e.g. in whisker or fibre form), barium sulphate, calcium carbonate, mica, alkali metal titanates, molybdenum trioxide, cashew dust, sillimanite, mullite, magnesium oxide, silica and iron oxide. The fillers may play a role in modifying some characteristics of the friction material, for example they may enhance the heat stability or noise reduction. The specific filler or fillers to be used may also depend on the other constituents of the friction material. Mica, cashew dust and rubber dust are known as noise suppressors. Preferred fillers include barites such as BaSO₄, petrol coke, Ca(OH)₂, mica, iron powder, rubber crumb friction material dust and potassium titanates (e.g. in whisker or fibre form).

Suitable reinforcing fibres may be added to the matrix. For example, the matrix may include man-made vitreous fibres (MMVF) especially stone wool fibres, other types of mineral fibres and/or aramid fibres such as Kevlar (RTM). The fibres may be added for example to increase the Young's modulus and to increase the toughness of the friction material. Suitable MMVF have number average fibre diameter in the range 5-10µm, lengths in the range 50-1000 µm, preferably in the range 100-750 µm, and having a low shot content, e.g. less than 1% wt, preferably less than 0.5% wt. Examples of suitable MMVF are available from Lapinus Fibres in the Roxul product line, e.g. Roxul 1000 Rock Brake products, such as Roxul 1000 RB 280 and RB205.

The friction material is prepared according to the following steps:
a. mixing a particulate inorganic porous material with other starting materials to form a mixture, wherein the particulate inorganic porous material comprises an anti-corrosive agent absorbed within its pores;
b. placing the mixture into a mold;
c. subjecting the mixture in the mold to a pressure of from 10 to 70 MPa.

Preferably the mixing step is a dry mixing step. Dry mixing is preferred due to industry standards for friction materials. In addition, a wet mixing process can lead to a brittle friction material due to evaporation of moisture during manufacture. The present invention avoids that problem by incorporating a liquid anticorrosive agent within a particulate inorganic porous material.

The pressing step may be a hot press or a cold press. Preferably, the conditions are a temperature of 120 to 180°C, preferably 150 to 170°C and a pressure of 20 to 40 MPa.

Optionally a subsequent curing step is utilised. This may be to cure e.g. a resin binder. Curing may take place in a stepwise process where the temperature is raised from ambient up to a curing temperature, of at least 150°C, preferably at least 180°C, for instance 200°C or more up to 250°C, preferably up to 215°C, followed by maintenance at the curing temperature for several hours such as 2-8 hours, preferably 4-6 hours, followed by a cooling stage.

The method preferably comprises a preliminary step of impregnating the anticorrosive agent into the pores of the particulate inorganic porous material. The particulate inorganic porous material may carry from 5% to 200% of its own weight in anticorrosive agent. Preferably the particulate inorganic porous material carries from 25 to 70% of its own weight in anticorrosive agent. This amount of anticorrosive agent may offer optimum controlled delivery of anticorrosive agent to the friction material surface whilst maintaining ease of processing and toughness and strength of the friction material. Impregnation may be carried out contacting the particulate inorganic porous material with anticorrosive agent in liquid form while mixing, for instance by spraying onto a fluid bed mixer or by mixing in a low shear mixer until all the liquid is absorbed with or without hearing, for instance carried out for a period of 1-60 minutes for instance 5-20 minutes.

Preferably the particulate inorganic porous material is subjected to a drying step after being impregnated with the anticorrosive agent and prior to mixing with the other components of the friction material. The drying step may be active, for example by increasing the temperature and/or decreasing the humidity, or passive, i.e. allowing moisture to naturally evaporate. This step may improve the strength of the friction material by reducing the amount of steam that is released during the hot press step of the production process for the friction material.

### Examples

### Example 1

A particulate porous calcium silicate material, commercially known as PROMAXON^{®}-D, was impregnated with Crystal 0075 waterglass in amounts of 0, 50, 100, 150 and 200 w/w%. In other words, an amount of waterglass was absorbed into the particulate porous calcium silicate material such that it carried 0%, 50%, 100%, 150% or 200% of its own weight in waterglass. The SiO₂:Na₂O ratio in the waterglass was 3.22. The impregnated particulate porous material in a volume % of 7% was mixed with other ingredients according to the following recipe and subjected to pressure at 160°C and 28 MPa in a mould to form NAO, non-steel friction materials.

The composition was followed by curing by heating up to 210°C over 5 hrs, maintaining at 210°C for 4 hrs and cooling to room temperature over 2 hrs.

| NAO | | |
|---|---|---|
| Components | **Volume** | |
| | **% (v/v)** | |
| Total | 100 | |
| Aramid fibre | 5 | |
| Barites | 8 | |
| RB205 Roxul1000 Mineral Fibre | 8 | |
| Graphite | 10 | |
| Synthetic Sulphides | 5 | |
| Friction dust particle | 10 | |
| Magnesium Oxide | 7 | |
| Potassium titanate | 18 | |
| Resin Novolac | 16 | |
| Zircon dioxide | 6 | |
| Anticorrosive Promaxon D | 7 | |

In addition a reference sample was made that excluded the particulate inorganic porous material PROMAXON^{®}-D.

The friction materials were evaluated for friction, wear and corrosion performance.

The friction materials were prepared as brake pads for testing with a steel rotor. The tests conducted were Krauss ECER90global specification friction performance.

Wear of the friction materials (brake pads) and rotors was measured according to test method adapted from SAE J2707 wear.

Corrosion of the friction materials and rotors was by tests based on ASTM B117 to determine the level of stiction. The test involves preconditioning of brake pad and material with an aqueous corroding liquid of 5% by weight NaCl and MgCl (1:1 weight), followed by clamping to a brake disk and introduction into a climatic chamber at 40°C, 100% relative humidity for 24 hr, then dried in the chamber at room temperature, 70% relative humidity for 72 hrs. the test samples are then inspected for stiction and the surfaces of disks and pads inspected after detachment for corrosion.

The reference sample (no particulate inorganic porous material) suffered very heavy stiction during testing. 80% of the surface of the brake pad was covered with corrosion.

In the sample with particulate inorganic porous material but no anticorrosive impregnated into the pores, heavy stiction was suffered as a result of testing. 80% of the surface between the pad and the discs was covered with corrosion.

In the sample including particulate inorganic porous material carrying 25% of its weight of waterglass, medium stiction was suffered and 40% of the surface between the pad and the disc was covered with corrosion. This is a clear improvement over the reference sample and the sample with 0% anticorrosive agent.

In the sample including particulate inorganic porous material carrying 50% of its weight of waterglass, no stiction was suffered and only 20% of the surface between the pad and the disc was covered with corrosion. This is a further clear improvement over the previous samples.

In the sample including particulate inorganic porous material carrying 100% of its weight of waterglass, no stiction was suffered and only 10% of the surface between the pad and the disc was covered with corrosion. This is a further clear improvement over the previous samples.

The best results were obtained for friction materials incorporating the particulate porous calcium silicate material impregnated with 50 w/w% and 100 w/w% waterglass.

### Example 2

Friction materials were prepared by mixing the starting materials and subjecting the mixture to pressure in a mould using the process conditions of Example 1 aboveto form brake pads. The formulation was a low met formulation according to the following:

| Low Sleet | | |
|---|---|---|
| Components | **Volume** | |
| | **% (v/v)** | |
| Total | 100 | |
| Aramid fibre | 1,5 | |
| Graphite | 14 | |
| RB280 Roxul1000 Mineral fibre | 8 | |
| Barites | 10 | |
| Steel fibres | 6 | |
| Resin Novolac | 13 | |
| Aluminium oxide | 3 | |
| Iron synthetic black Oxide 400 | 5 | |
| Rubber | 5,2 | |
| Synthetic Sulphides | 9 | |
| Anticorrosive Promaxon D | 5 | |
| Petrol coke | 8,7 | |
| Vermiculite | 11,6 | |

The particulate inorganic porous material was a calcium silicate known commercially as PROMAXON^{®}-D. It was impregnated with Crystal 0075 waterglass (same composition waterglass as per example 1) prior to mixing with the other ingredients for the friction material. Six samples were prepared, with different degrees of saturation of waterglass in the porous material: the porous material carried 0%, 25%, 50%, 75%, 100% and 125% of its own weight in waterglass. Sample friction materials in the form of brake pads were prepared to compare the performance at different saturation levels.

The brake pads were tested with a steel rotor to simulate a motor vehicle braking system.

Testing was carried out to determine the coefficient of friction for each sample according to Krauss ECE R90 annex (constant torque) European Certification testing procedure for global specification friction performance.

Wear of the brake pad and rotor were tested according to an adapted version of SAE J2707 wear procedure.

The digits in the codes used in the figures indicate the proportion of waterglass.

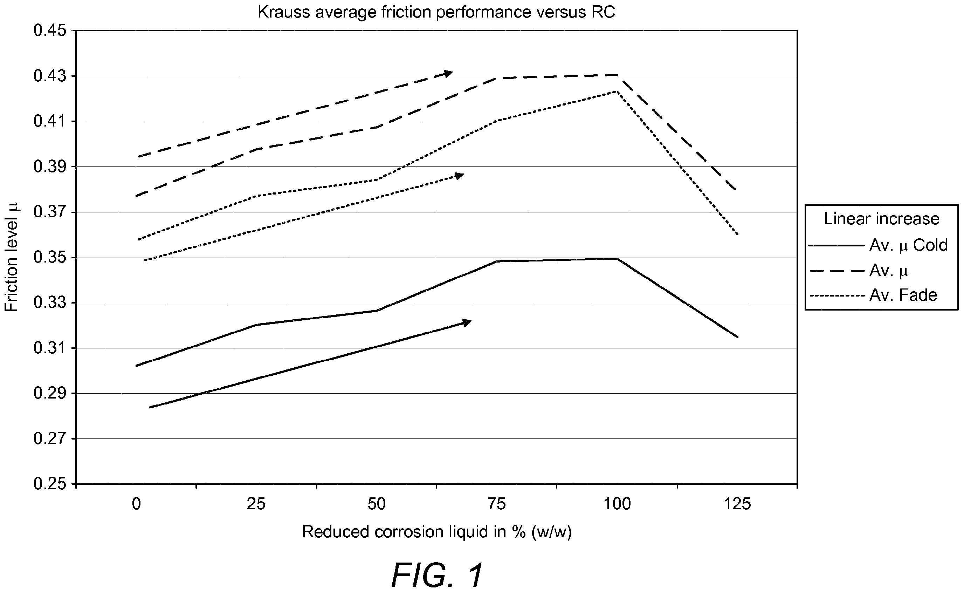

Figures 1, 2 and 3 show the test results for example 2.

As can be seen in Figure 1 there was an increase on average friction level, average cold section friction level, and average fade section friction level with the increase of sodium silicate liquid solution content. These three friction sections are critical in the development of brake pads.

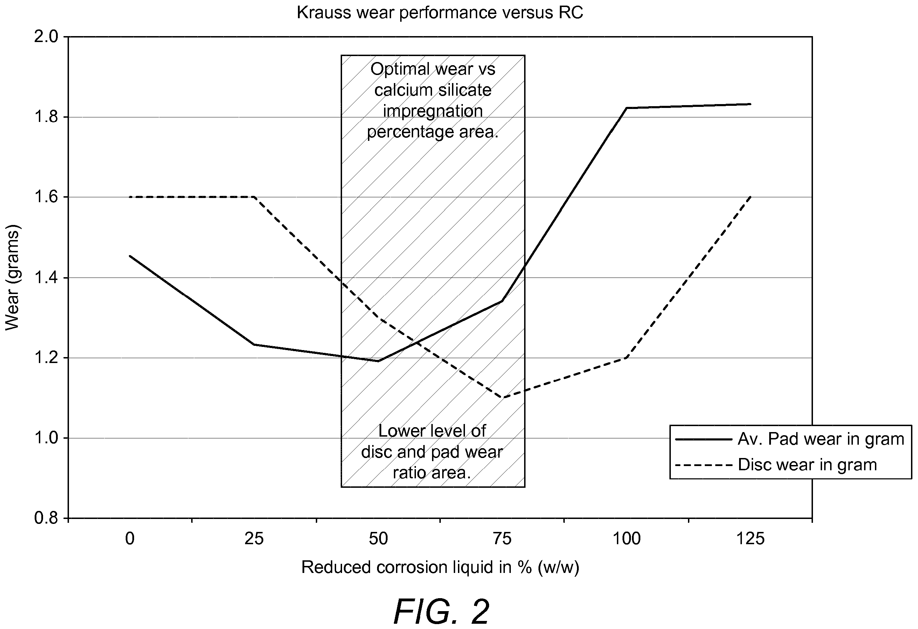

Figure 2 shows the behaviour of pad and rotor wear with the increase of sodium silicate liquid solution content. Both of them show an improvement up to a certain point where the effect becomes negative. The ration between disc and pad wear is optimized for percentages of sodium silicate liquid solution content between 25 and 70%.

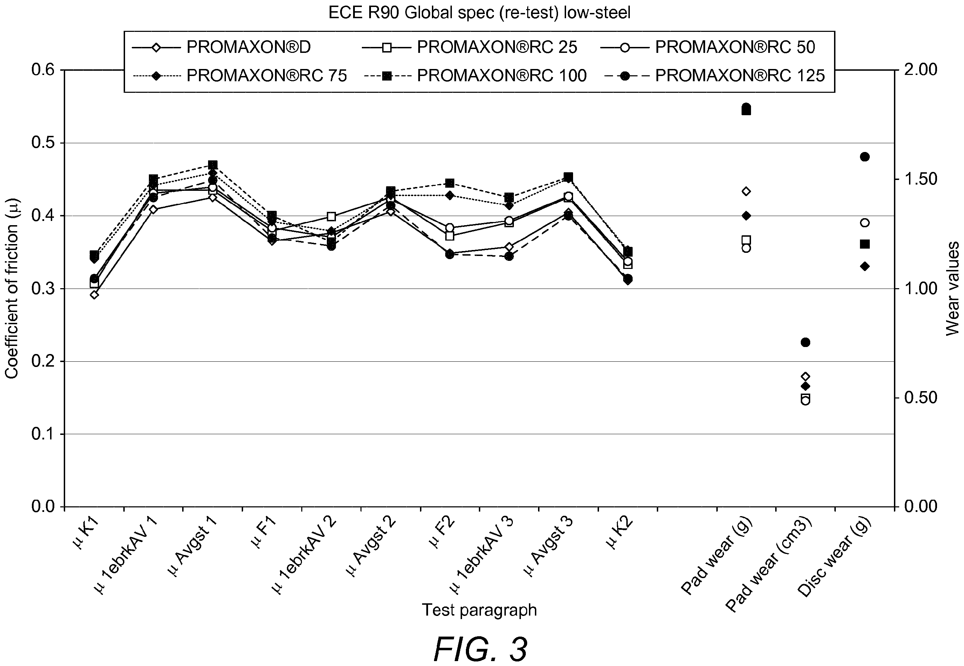

The friction and wear results are shown in Figure 3.

In sections µF1 and µF2, it is clear that the higher the amount of liquid solution, the higher the fade friction level and also the higher all the friction segments level after µF2.

If the particulate inorganic porous material carries more than 125% of its own weight of anticorrosive agent solutions, the results cease to improve.

From the disc wear point of view it is clear there is an improvement up to 50% liquid solution impregnation. After 50% it becomes worse.

From these results in combination with the anticorrosive tests of example 1, we conclude best impregnation rates are:
25, 50 and 75%, i.e. the particulate inorganic porous material carries from 25 to 75% of its own weight in anticorrosive agent for the best results.

Without wishing to be bound by theory, it is believed that a combination of four factors influences these results:
- Friction material processing. The higher the amount of impregnation, the higher the probability of having cracks in the friction material after hot pressing.
- Influence on corrosion and stiction improvement
- Influence in friction performance
- Influence in disc wear.

### Conclusion

- Inorganic porous materials with high thermal resistance can be used as carriers for liquid solutions.
- Liquid solutions of anticorrosive have great potential for efficiency savings in the friction material industry.
- The amount of infiltration could be from 5% (w/w) to saturation level. In the specific case of Promaxon^{®}-D it is from 5% to 200%.
- The optimal impregnation depends on the material segment (NAO, Low met or semimet), in the case of Promaxon D it is between 25 and 70%.

## Claims

1. A non-asbestos organic friction material comprising a particulate inorganic porous material, wherein the particulate porous material comprises an anticorrosive agent absorbed within its pores, wherein the anticorrosive agent comprises an alkali silicate, wherein the particulate inorganic porous material comprises a calcium silicate structure.

2. The friction material of claim 1, wherein the alkali silicate is sodium silicate, potassium silicate or mixtures thereof, for instance in the form of an aqueous solution.

3. The friction material of any preceding claim, wherein the calcium silicate structure is Ca₆Si₆O₁₇(OH)₂.

4. The friction material of any preceding claim, wherein the particulate inorganic porous material has a number average particle size of from 5 µm to 300 µm.

5. The friction material of any preceding claim, wherein the particulate inorganic porous material has a BET specific surface area of at least 40 m²/g when calculated in the absence of the active agent.

6. The friction material of any preceding claim, wherein the particulate inorganic porous material has an oil absorption number in the range 100 to 500, when determined in the absence of the active agent, preferably in the range 150 to 300, wherein the oil absorption number is determined according to ISO787-5:1980.

7. The friction material of any preceding claim, wherein the anticorrosive agent is present in an amount of between 1.5 and 50 wt%, expressed as a percentage of the mass of dry matter in the anticorrosive agent over the combination of the dry weight of the particulate inorganic porous material and the mass of the dry matter in the anticorrosive agent.

8. The friction material of any preceding claim, further comprising organic binder in an amount in the range of from 5 to 45% by weight, preferably 10-20% by weight, for instance a thermosetting resin.

9. The friction material of any preceding claim, further comprising fibres.

10. The friction material of any preceding claim, further comprising man-made vitreous fibres (MMVF).

11. The friction material of any preceding claim, wherein the particulate inorganic porous material and the alkali silicate absorbed within its structure together make up from 1 to 10 wt% of the friction material, preferably from 2 to 5% wt.

12. The friction material of any preceding claim, wherein the particulate inorganic porous material comprises fibre balls.

13. A brake pad comprising the friction material of any preceding claim.

14. A vehicle braking system comprising a rotor and the brake pad of claim 13, wherein the rotor and the brake pad are configured to contact on braking, preferably wherein the rotor is metallic, more preferably an electronic parking brake system.

15. A method of making a non-asbestos organic friction material according to any of claims 1 to 12, the method comprising:
a) mixing a particulate inorganic porous material comprising a calcium silicate structure with other starting materials to form a mixture, wherein the particulate inorganic porous material comprises an anti-corrosive agent absorbed within its pores, wherein the anticorrosive agent comprises an alkali silicate;
b) placing the mixture into a mold;
c) subjecting the mixture in the mold to a pressure of from 10 to 70 MPa.

16. The method of claim 15, further comprising an initial step of impregnating the particulate inorganic porous material with the anti-corrosive agent, preferably wherein the anti-corrosive agent is in the form of an aqueous solution.

## Patentansprüche

1. Asbestfreies organisches Reibungsmaterial, umfassend ein partikelförmiges anorganisches poröses Material, wobei das partikelförmige poröse Material ein Korrosionsschutzmittel umfasst, das innerhalb seiner Poren absorbiert wird, wobei das Korrosionsschutzmittel ein Alkalisilicat umfasst, wobei das partikelförmige anorganische poröse Material eine Calciumsilicat-Struktur umfasst.

2. Reibungsmaterial nach Anspruch 1, wobei das Alkalisilicat Natriumsilicat, Kaliumsilicat oder Mischungen davon ist, zum Beispiel in der Form einer wässrigen Lösung.

3. Reibungsmaterial nach einem der vorstehenden Ansprüche, wobei die Calciumsilicat-Struktur Ca₆Si₆O₁₇(OH)₂ ist.

4. Reibungsmaterial nach einem der vorstehenden Ansprüche, wobei das partikelförmige anorganische poröse Material eine zahlenmittlere Partikelgröße von 5 µm bis 300 µm aufweist.

5. Reibungsmaterial nach einem der vorstehenden Ansprüche, wobei das partikelförmige anorganische poröse Material eine BET-spezifische-Oberfläche von mindestens 40 m²/g aufweist, wenn sie in der Abwesenheit des Wirkstoffs berechnet wird.

6. Reibungsmaterial nach einem der vorstehenden Ansprüche, wobei das partikelförmige anorganische poröse Material eine Ölabsorptionszahl in dem Bereich von 100 bis 500, vorzugsweise in dem Bereich 150 bis 300, aufweist, wenn diese in der Abwesenheit des Wirkstoffs bestimmt wird, wobei die Ölabsorptionszahl gemäß ISO787-5:1980 bestimmt wird.

7. Reibungsmaterial nach einem der vorstehenden Ansprüche, wobei das Korrosionsschutzmittel in einer Menge zwischen 1,5 und 50 Gew.-% vorhanden ist, ausgedrückt als ein Prozentsatz der Masse von Trockensubstanz in dem Korrosionsschutzmittel über die Kombination des Trockengewichts des partikelförmigen anorganischen porösen Materials und der Masse der Trockensubstanz in dem Korrosionsschutzmittel.

8. Reibungsmaterial nach einem der vorstehenden Ansprüche, ferner umfassend organisches Bindemittel in einer Menge in dem Bereich von 5 bis 45 Gew.-%, vorzugsweise 10 bis 20 Gew.-%, zum Beispiel ein duroplastisches Harz.

9. Reibungsmaterial nach einem der vorstehenden Ansprüche, ferner umfassend Fasern.

10. Reibungsmaterial nach einem der vorstehenden Ansprüche, ferner umfassend künstliche glasartige Mineralfasern (MMVF).

11. Reibungsmaterial nach einem der vorstehenden Ansprüche, wobei das partikelförmige anorganische poröse Material und das innerhalb seiner Struktur absorbierte Alkalisilicat zusammen von 1 bis 10 Gew.-% des Reibungsmaterials, vorzugsweise von 2 bis 5 Gew.-%, ausmachen.

12. Reibungsmaterial nach einem der vorstehenden Ansprüche, wobei das partikelförmige anorganische poröse Material Faserkugeln umfasst.

13. Bremsbelag, umfassend das Reibungsmaterial nach einem der vorstehenden Ansprüche.

14. Fahrzeugbremssystem, umfassend einen Rotor und den Bremsbelag nach Anspruch 13, wobei der Rotor und der Bremsbelag konfiguriert sind, um sich bei dem Bremsen zu berühren, vorzugsweise wobei der Rotor metallisch ist, mehr bevorzugt ein elektronisches Feststellbremssystem.

15. Verfahren zum Herstellen eines asbestfreien organischen Reibungsmaterials nach einem der Ansprüche 1 bis 12, das Verfahren umfassend:
a) Mischen eines partikelförmigen anorganischen porösen Materials, umfassend eine Calciumsilicat-Struktur mit anderen Ausgangsmaterialien, um eine Mischung auszubilden, wobei das partikelförmige anorganische poröse Material ein innerhalb ihrer Poren absorbiertes Korrosionsschutzmittel umfasst, wobei das Korrosionsschutzmittel ein Alkalisilicat umfasst;
b) Platzieren der Mischung in eine Gussform;
c) Unterziehen der Mischung in der Gussform einem Druck von 10 bis 70 MPa.

16. Verfahren nach Anspruch 15, ferner umfassend einen ursprünglichen Schritt eines Imprägnierens des partikelförmigen anorganischen porösen Materials mit dem Korrosionsschutzmittel, vorzugsweise wobei das Korrosionsschutzmittel in der Form einer wässrigen Lösung vorliegt.

## Revendications

1. Matériau de friction organique sans amiante comprenant un matériau poreux inorganique particulaire, dans lequel le matériau poreux particulaire comprend un agent anticorrosion absorbé dans ses pores, dans lequel l'agent anticorrosion comprend un silicate alcalin, dans lequel le matériau poreux inorganique particulaire comprend une structure de silicate de calcium.

2. Matériau de friction selon la revendication 1, dans lequel le silicate alcalin est du silicate de sodium, du silicate de potassium ou des mélanges de ceux-ci, par exemple sous la forme d'une solution aqueuse.

3. Matériau de friction selon l'une quelconque revendication précédente, dans lequel la structure de silicate de calcium est Ca₆Si₆O₁₇(OH)₂.

4. Matériau de friction selon l'une quelconque revendication précédente, dans lequel le matériau poreux inorganique particulaire a une taille moyenne de particules en nombre allant de 5 µm à 300 µm.

5. Matériau de friction selon l'une quelconque revendication précédente, dans lequel le matériau poreux inorganique particulaire a une surface spécifique BET d'au moins 40 m²/g lorsqu'elle est calculée en l'absence de l'agent actif.

6. Matériau de friction selon l'une quelconque revendication précédente, dans lequel le matériau poreux inorganique particulaire a un indice d'absorption d'huile dans la plage de 100 à 500, lorsqu'il est déterminé en l'absence de l'agent actif, de préférence dans la plage de 150 à 300, dans lequel l'indice d'absorption d'huile est déterminé selon ISO787-5:1980.

7. Matériau de friction selon l'une quelconque revendication précédente, dans lequel l'agent anticorrosion est présent en une quantité entre 1,5 et 50 % en poids, exprimée en pourcentage de la masse de matière sèche dans l'agent anticorrosion sur la combinaison du poids sec du matériau poreux inorganique particulaire et de la masse de la matière sèche dans l'agent anticorrosion.

8. Matériau de friction selon l'une quelconque revendication précédente, comprenant en outre un liant organique en une quantité dans la plage de 5 à 45 % en poids, de préférence 10 à 20 % en poids, par exemple une résine thermodurcissable.

9. Matériau de friction selon l'une quelconque revendication précédente, comprenant en outre des fibres.

10. Matériau de friction selon l'une quelconque revendication précédente, comprenant en outre des fibres vitreuses de fabrication humaine (MMVF).

11. Matériau de friction selon l'une quelconque revendication précédente, dans lequel le matériau poreux inorganique particulaire et le silicate alcalin absorbé dans sa structure constituent ensemble de 1 à 10 % en poids du matériau de friction, de préférence de 2 à 5 % en poids.

12. Matériau de friction selon l'une quelconque revendication précédente, dans lequel le matériau poreux inorganique particulaire comprend des billes de fibres.

13. Plaquette de frein comprenant le matériau de friction selon une quelconque revendication précédente.

14. Système de freinage de véhicule comprenant un rotor et la plaquette de frein selon la revendication 13, dans lequel le rotor et la plaquette de frein sont conçus pour venir en contact lors du freinage, de préférence dans lequel le rotor est métallique, plus préférablement un système de frein de stationnement électronique.

15. Procédé de fabrication d'un matériau de friction organique sans amiante selon l'une quelconque des revendications 1 à 12, le procédé comprenant :
a) le mélange d'un matériau poreux inorganique particulaire comprenant une structure de silicate de calcium avec d'autres matériaux de départ pour former un mélange, dans lequel le matériau poreux inorganique particulaire comprend un agent anticorrosion absorbé dans ses pores, dans lequel l'agent anticorrosion comprend un silicate alcalin ;
b) le placement du mélange dans un moule ;
c) la soumission du mélange dans le moule à une pression de 10 à 70 MPa.

16. Procédé selon la revendication 15, comprenant en outre une étape initiale d'imprégnation du matériau poreux inorganique particulaire avec l'agent anticorrosion, de préférence dans lequel l'agent anticorrosion est sous la forme d'une solution aqueuse.
